# EUROPÄISCHE PATENTANMELDUNG

(11) **EP 1 288 804 A1**
(43) Veröffentlichungstag der Anmeldung: **05.03.2003**
(21) Anmeldenummer: 01250299.3
(22) Anmeldetag: 21.08.2001
(51) Int. Cl.: G06F 17/60

(54) **Verfahren zur Belieferung eines Abnehmers mit einem Produkt und zugehöriges Kennzeichnungsmittel**

(71) Anmelder: SIEMENS AKTIENGESELLSCHAFT, 80333 München (DE)
(72) Erfinder: Genzel, Rolf-Guenter, 64750 Luetzelbach (DE); Luebben, Wilke, 91356 Kirchehrenbach (DE)

(57) **Zusammenfassung**

Ein Verfahren zur Belieferung eines Abnehmers mit einem Produkt auf dem Gebiet von elektrotechnischen Schaltanlagen und Schranksystemen sieht vor, dass ein Technologiegeber als Franchise-Geber (4) handelt und hierzu einen Franchise-Nehmer (5) eine vollständige Dokumentation zur Fertigung eines Produktes zur Verfügung stellt. Der Franchise-Geber stellt ferner Kennzeichnungsmittel (6; 10; 15) bereit, die einen Datenträger wenigstens zur Identifizierung des Franchise-Gebers (4) enthalten und die der Franchise-Nehmer (5) an dem Produkt vor der Lieferung an den Abnehmer anbringt.

## Beschreibung

Die Erfindung befasst sich mit einem Verfahren zur Belieferung eines Abnehmers mit einem Produkt auf dem Gebiet von elektrotechnischen Schaltanlagen und Schranksystemen, bei dem ein Technologie-Geber die technische Spezifikation des Produktes erstellt und diese im Rahmen einer vertraglichen Vereinbarung einem Technologie-Empfänger zur wirtschaftlichen Verwertung zwecks Belieferung des Abnehmers überlässt.

Ein Verfahren der genannten Art wird gewöhnlich eingesetzt, wenn ein als Technologie-Geber tätiges Unternehmen eigenständig entwickelte Produkte der genannten Art nicht nur selbst fertigen und an die Abnehmer auf eigene Rechnung vertreiben möchte. Das Unternehmen beliefert dann beispielsweise Abnehmer in einem bestimmten regionalen Markt aus einer besonders angepassten und wirtschaftlich günstigen Fertigungsstätte selbst. Andere regionale Märkte werden von einem oder mehreren Technologie-Empfängern bedient, die im Rahmen vertraglicher Vereinbarungen mit dem Technologie-Geber als Lizenznehmer eigenständig handeln. Für die Abnehmer ergeben sich hierdurch in der Regel kürzere Lieferwege und Lieferzeiten.

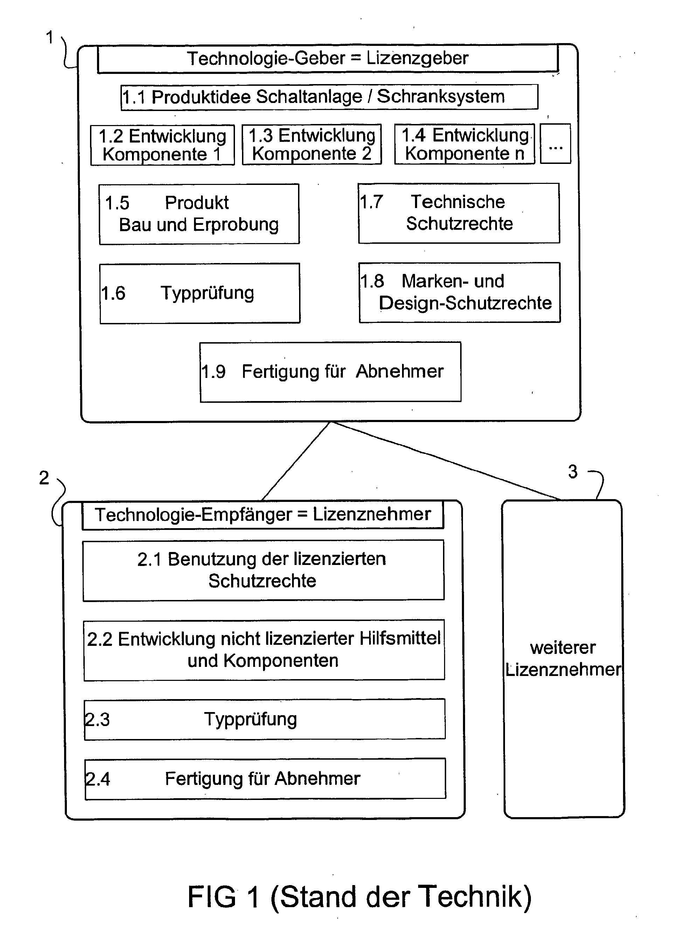

Einzelheiten dieses bekannten Verfahrens sind in der Figur 1 veranschaulicht. Der mit 1 bezeichnete Block umfasst dabei die Aktivitäten des Technologie-Gebers. Dieser unterhält eine zur Entwicklung eines Produktes erforderliche Organisation und erzeugt im Schritt 1.1 zunächst eine Produktidee für eine Schaltanlage oder ein Schranksystem einer innovativen Spezifikation. Entsprechend der komplexen Struktur dieser Art von Produkten schließt sich hieran in den Schritten 1.2, 1.3 und 1.4 und ggf. weiteren Schritten die Entwicklung der verschiedenen benötigten Komponenten wie Gerüst, Umhüllungsteile, Sammelschiene, Montage- bzw. Einschubtechnik an. Ist diese Tätigkeit erfolgreich abgeschlossen, können im Schritt 1.5 Muster des Produktes erstellt und erprobt werden. Entsprechen die Muster den Erwartungen, wird das Produkt im Schritt 1.6 einer Typprüfung unterzogen, als deren Ergebnis feststeht, dass die Eigenschaften des Produktes bestimmten einschlägigem Normen und Vorschriften entsprechen.

Zur Vereinfachung der Darstellung ist in der Figur 1 davon abgesehen worden, evtl. erforderliche Wiederholungen als Schleife darzustellen. Insbesondere kann eine erneute Entwicklung erforderlich sein, wenn sich erst beim fertigen Produktmuster Bedarf an einer Verbesserung oder Änderung herausstellt. Ebenfalls kann es erforderlich sein, Typprüfungen mehrfach durchzuführen, wenn das Produkt in mehreren Märkten eingeführt werden soll, in denen unterschiedliche Vorschriften gelten.

Die vorstehend geschilderten Verfahrensschritte werden als begleitende Tätigkeitsfelder des gewerblichen Rechtsschutzes Vorkehrungen getroffen, um die Unabhängigkeit der neuen Entwicklung von fremden Schutzrechten zu gewährleisten und zugleich eigene Schutzrechte zu erwerben. Außer den rein technischen Schutzrechten können auch Marken- und Design-Schutzrechte entstehen, die Grundlage einer Markenlizenz sein können. Alle oder einzelne dieser Schutzrechte stellen die Grundlage vertraglicher Vereinbarungen mit Technologie-Empfängern dar, die in der Figur 1 als Blöcke 2 und 3 angedeutet sind. Zur Vereinfachung sind in der Figur 1 nur einige bei dem als Lizenznehmer handelnden Technologie-Empfänger im Block 2 anfallende Verfahrensschritte gezeigt. Hierzu gehörten insbesondere im Schritt 2.1 die Benutzung und Auswertung der lizenzierten Schutzrechte und die in der Regel erforderliche Entwicklung nicht lizenzierter Hilfsmittel und Komponenten im Schritt 2.2. Das bei dieser Vorgehensweise entstehende Produkt kann zwar wesentliche Eigenschaften des beim Lizenzgeber (Block 1 in der Figur 1) entwickelten Produktes haben, wird diesem aber in der Regel nicht so weitgehend entsprechen, dass die beim Lizenzgeber durchgeführte Typprüfung auch für das Produkt des Lizenznehmers gilt. Insbesondere ist der Lizenznehmer in seinen Produktionsverfahren, der Beschaffung der Halbzeuge, Rohstoffe usw. ungebunden. Daher ist im Schritt 2.3 eine unabhängige Typprüfung vorgesehen. Weitere Lizenznehmer (Block 32 in der Figur 1) unterliegen ähnlichen Bedingungen.

Der Erfindung liegt die Aufgabe zu Grunde, ein anderes Verfahren zur Belieferung von Abnehmern mit Produkten der genannten Art bereit zu stellen, bei dem der Aufwand zur Belieferung von Abnehmern mit Produkten der genannten Art Weg wesentlich verringert und die Produktsicherheit erhöht sind.

Gemäß der Erfindung weist hierzu das Verfahren folgende Schritte bzw. Merkmale auf:
- der Technologie-Geber handelt durch Bereitstellung der Spezifikation und weiterer zur Herstellung des Produktes in einer typgeprüften Ausführung benötigter Hilfsmittel in der Gestalt technischer Anleitungen und Informationen sowie des Benutzungsrechtes an einem Markenzeichen des Technologie-Gebers als Franchise-Geber,
- der Technologie-Empfänger handelt durch Auswertung der Spezifikation, der Hilfsmittel und des Benutzungsrechtes als Franchise-Nehmer,
- der Franchise-Geber stellt ein Kennzeichnungsmittel bereit, das einen mittels eines elektronischen Lesegerätes lesbaren Datenträger zur Identifizierung des Franchise-Gebers trägt,
- der Franchise-Nehmer bringt das Kennzeichnungsmittel nach der Herstellung des Produktes an diesem an und liefert das Produkt an den Abnehmer.

Der Einsatz eines Franchise-Systems im Zusammenhang mit elektrotechnischen Produkten der genannten Art bedeutet eine wesentliche Verbesserung für die Belieferung von Abnehmern in einer beliebigen Region. Die Verbesserung beruht zum einen darauf, dass im Unterschied zu der bisher üblichen Lizenzierung die Lieferfähigkeit eines Franchise-Nehmers viel rascher erreicht wird, da es gerade zum Wesen von Franchise-Systemen gehört, dass der Franchise-Nehmer durch den Franchise-Geber eine Unterstützung erhält, die über eine reine Lizenz wesentlich hinaus geht. Insbesondere werden ihm nicht nur alle benötigten technischen Dokumentationen zur Herstellung der Produkte zur Verfügung gestellt, sondern je nach Bedarf auch wesentliche Komponenten, Werkzeuge, Vorrichtungen und Rohstoffe bzw. Halbzeuge. Hierdurch wird der Franchise-Nehmer in die Lage versetzt, das Produkt in einer typgeprüften Ausführung zu liefern, ohne dass er sich mit den oft langwierigen und aufwändigen Prüfungen sowie Bescheinigungsverfahren befassen muss, um die entsprechenden Nachweise zu erbringen. Ferner ist eine Markenlizenz grundsätzlich eingeschlossen, die dem Franchise-Nehmer ein entsprechendes Auftreten gegenüber den Abnehmern ermöglicht.

Als weitere wertvolle Eigenschaft des Verfahrens nach der Erfindung ist hervorzuheben, dass durch das Kennzeichnungsmittel die Identität aller im Rahmen des Franchise-Systems hergestellten und ausgelieferten Produkte jederzeit nachprüfbar ist. Hierdurch ist ein unberechtigter Nachbau der Produkte feststellbar. Dies ist ein Gesichtspunkt, der über wirtschaftliche Erwägungen weit hinausgeht und insbesondere Fragen der Produktverantwortung und der Technischen Sicherheit umfasst. Dadurch nämlich, dass der Franchise-Geber über ein wirksames Mittel verfügt, die eindeutige Zugehörigkeit eines Produktes zu einer vom ihm abgeschlossenen Franchise-Vereinbarung festzustellen, kann er unberechtigt nachgebaute und möglicherweise technisch unzuverlässige oder mangelhafte Produkte ("fake products") identifizieren und Ansprüche auf Schadensersatz erfolgreich abweisen.

Im Rahmen der Erfindung kann der Datenträger die Gestalt eines Strichcodes aufweisen, wobei zur Erfassung des Dateninhaltes des Strichcodes ein tragbares und netzunabhängig betreibbares Strichcode-Lesegerät mit einer eigenen Anzeigevorrichtung bereitgehalten wird. Ein Strichcode stellt offensichtlich ein preiswertes Kennzeichnungsmittel dar. Durch seine Anbringung an einer geeigneten Stelle des Produktes kann dafür gesorgt sein, dass eine unerlaubte Duplizierung weitgehend ausgeschlossen ist.

Eine gesteigerte Sicherheit gegen Missbrauch ist dadurch zu erreichen, dass das Kennzeichnungsmittel zur Speicherung des Datensatzes einen elektronisch auswertbaren Datenträger enthält. Dies hat den Vorteil, dass ein wesentlich größerer Datensatz definiert werden kann, als ihn ein Strichcode wiederzugeben vermag. Auch ist ein besserer Schutz der Daten durch Unterbringung des Datenträgers in dem Kennzeichnungsmittel zu erreichen.

Als Datenträger mit hoher Zuverlässigkeit, die als aktive (lesbare und beschreibbare) elektronische Speicher mit einer praktisch unüberwindlichen Fälschungssicherheit ausgestattet sein können, eignen sich im Rahmen der Erfindung insbesondere die integrierten Speicher-Bausteine von Bank- oder Versicherungskarten sowie Transpondereinheiten. Alle soeben genannten Datenträger können mit geeigneten tragbaren Lesegeräten zusammenwirken, die eine eigene Anzeigevorrichtung aufweisen und damit eine direkte Auswertung des Datensatzes ermöglichen. Transpondereinheiten haben dabei den Vorzug, dass ein Datenaustausch berührungslos und aus einer gewissen Entfernung durchführbar ist.

Es kann erwünscht sein, in die Kennzeichnung eines Produktes dessen individuelle Merkmale, wie Auftragsdatum, Schaltbild, Gerätebestückung oder ähnliche Angaben einzubeziehen. Hierzu kann im Rahmen der Erfindung vorgesehen sein, dass der Franchise-Nehmer vor der Auslieferung eines Produktes an einen Abnehmer für dessen Auftrag spezifische Daten des Produktes an den Franchise-Geber übermittelt, dieser ein die spezifischen Daten enthaltendes Kennzeichnungsmittel erstellt und dem Franchise-Nehmer übergibt und dieser das Kennzeichnungsmittel vor der Auslieferung des Produktes an diesem anbringt. Wir in dieser Weise vorgegangen, so kann jederzeit festgestellt werden, ob das Produkt der ursprünglichen Spezifikation entspricht oder verändert worden ist.

Produkte der vorliegend betrachteten Art bieten aufgrund ihrer räumlichen Ausdehnung zahlreiche Möglichkeiten zur Anbringung des Kennzeichnungsmittels. Eine rasche Auswertung kann dadurch erleichtert werden, dass das Kennzeichnungsmittel an der Frontseite eines Schaltschrankes oder einer Schaltanlage angebracht wird. Besteht andererseits Anlass, einen Schutz des Kennzeichnungsmittels gegen Verschmutzung oder Beschädigung in Betracht zu ziehen, so kann das Kennzeichnungsmittel auch im Inneren eines Schaltschrankes oder einer Schaltanlage an einer hierfür vorgesehenen Stelle befestigt werden. In jedem Fall empfiehlt es sich, das Kennzeichnungsmittel unlösbar bzw. nur unter Beschädigung oder Zerstörung lösbar zu befestigen.

Aufgrund der mit dem Franchise-System verknüpften Marken-Lizenz wird das Produkt in der Regel mit einem außen sichtbaren Schriftzug oder dgl. des Technologie-Gebers bzw. Franchise-Gebers versehen. Im Rahmen der Erfindung kann hierzu das Kennzeichnungsmittel als ein mit einem den Franchise-Geber bezeichnenden Schriftzug versehenes und den Datenträger aufweisendes Bezeichnungsschild ausgebildet sein. Dabei kann der Datenträger in das Material des Bezeichnungsschildes eingebettet sein, wobei der Datenträger vom Material des Bezeichnungsschildes umschlossen und unsichtbar sein kann.

Die Erfindung wird im folgenden anhand der in den Figuren veranschaulichten Ausgestaltungen eines Verfahrens und zughöriger Kennzeichnungsmittel näher erläutert.

Die Figur 2 zeigt in einer der Figur 1 entsprechenden Darstellung die Belieferung eines Abnehmers nach dem erfindungsgemäßen Verfahren.

In der Figur 3 ist ein Strichcode und ein zugehöriges Lesegerät als Mittel zur Kennzeichnung eines Produktes und zur Prüfung dieser Kennzeichnung gezeigt.

Die Figur 4 zeigt als weiteres Beispiel für ein Kennzeichnungsmittel eine Chipkarte bzw. Smartcard mit zugehörigem Lesegerät.

In der Figur 5 ist ein kombiniertes Beze;ichnungsschild und Kennzeichnungsmittel mit Lesegerät dargestellt.

Die Figur 6 zeigt das kombinierte Bezeichnungsschild gemäß der Figur 5 im Profil bzw. in einer Draufsicht, um die Einbettung des Kennzeichnungsmittels sowie eine Haftschicht zu veranschaulichen.

In der Figur 7 ist vereinfacht in einer Frontansicht ein Schaltschrank mit einem außen angebrachten Kennzeichnungsmittel gezeigt.

Die Figur 8 zeigt einen der Figur 7 ähnlichen Schaltschrank mit einem an der Innenseite der Tür angebrachten Kennzeichnungsmittel.

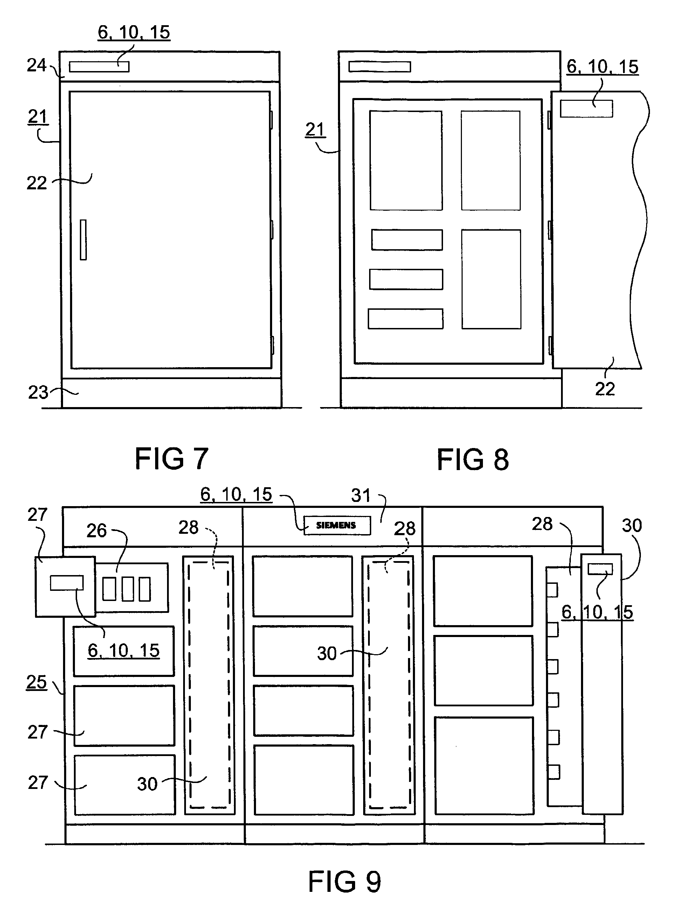

Als weiteres Beispiel zeigt die Figur 9 eine dreifeldrige Schaltanlage mit einem von außen erfassbaren Kennzeichungsmittel.

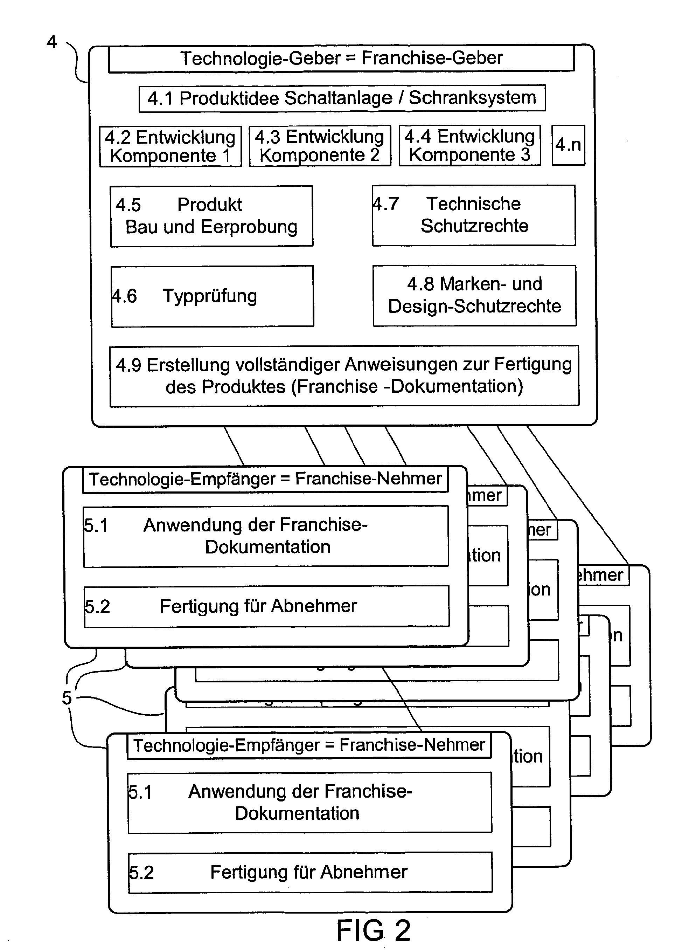

Bei dem Verfahren nach der Erfindung, wie es in der Figur 2 veranschaulicht ist, entsprechen die Schritte 4.1, 4.2, 4.3, 4.5, 4.6, 4.7 und 4.8 sinngemäß den 1.1 bis 1.8 in der Figur 1. Einen wesentlichen Unterschied stellt der Schritt 4.9 dar, in welchem der nun als Franchise-Geber 4 handelnde Technologiegeber im Anschluss an die Entwicklung des Produktes und seiner Typprüfung im Rahmen einer Franchise-Dokumentation vollständige Anweisungen zur Fertigung des Produktes erstellt, derart, dass danach Produkte mit gleicher Beschaffenheit und gleichen Eigenschaften herstellbar sind, wie sie die Produkte des Technologiegebers aufweisen. Damit entfällt bei dem als Franchise-Nehmer handelnden Technologie-Empfänger (Blöcke 5 in der Figur 2) das Erfordernis einer gesonderten Typprüfung. Für den Franchisenehmer entsteht hierdurch der bedeutende Vorteil, dass er in wesentlich kürzerer Zeit lieferfähig ist als es im Rahmen eines gewöhnlichen Lizenzvertrages entsprechend der Figur 1 der Fall wäre. Es gelangt durch Anwendung der Franchise-Dokumentation im Schritt 5.1 direkt zu typgeprüften Produkten, die er im Schritt 5.2 für seine Abnehmer fertigt. Die Figur 2 veranschaulicht, dass mit dem Franchisegeber 4 eine größere Anzahl von Franchisenehmern (Blöcke 5) verbunden sein kann, deren wirtschaftliche Größe unterschiedlich sein kann. Der Franchisegeber 4 kann seine Franchise-Dokumentation (4.9) hieran anpassen, in dem er beispielsweise vorsieht, dass bestimmte Komponenten durch ihn nach Bedarf zugeliefert werden oder dass bestimmte Halbzeuge oder Rohstoffe aus festgelegten Bezugsquellen zugeliefert werden.

Obwohl darauf hingewiesen wurde, dass die Schritte 4.1 bis 4.8 in der Figur 2 den Schritten 1.1 bis 1.8 in der Figur 1 entsprechen, kann jedoch insbesondere der Inhalt der Schritte 4.2, 4.3, 4.4 und evtl. weiterer entsprechender Schritte insofern unterschiedlich sein, als das angestrebte Entwicklungsergebnis von vornherein die Besonderheiten berücksichtigt, die bei Franchise-Nehmern bestehen können. Hierzu gehören beispielsweise die Größe und Ausstattung des Betriebes des Franchise-Nehmers. Eine bestimmte Komponente des Produktes kann daher z. B. je nach den verfügbaren Fertigungs- und Montageverfahren bei den Franchise-Nehmern als ein mehrere Funktionen aufweisendes Kunststoff-Spritzgussteil oder als ein technisch gleichwertiges Stanz-Biegeteil entwickelt werden. Damit ist die betreffende Komponente sowohl bei großen als auch bei kleinen und mittleren wirtschaftlich herstellbar.

Niederspannungs-Schaltanlagen und Schranksysteme sind, wie schon erwähnt, hochspezialisierte Produkte mit entsprechenden Anforderungen an Zuverlässigkeit, Lebensdauer und technische Sicherheit. Um der sich hieraus ergebenden Verantwortung gerecht zu werden, muss sich der Franchise-Geber davon vergewissern, dass mit seiner Kennzeichnung versehene Produkte tatsächlich der Franchise-Dokumentation (4.9 in Fig. 2) entsprechen. Dies wird durch ein Kennzeichnungsmittel erreicht, welches der Franchisegeber dem Franchisenehmer zur Verfügung stellt und dass dieser an dem Produkt vor der Lieferung an den Abnehmer anbringt.

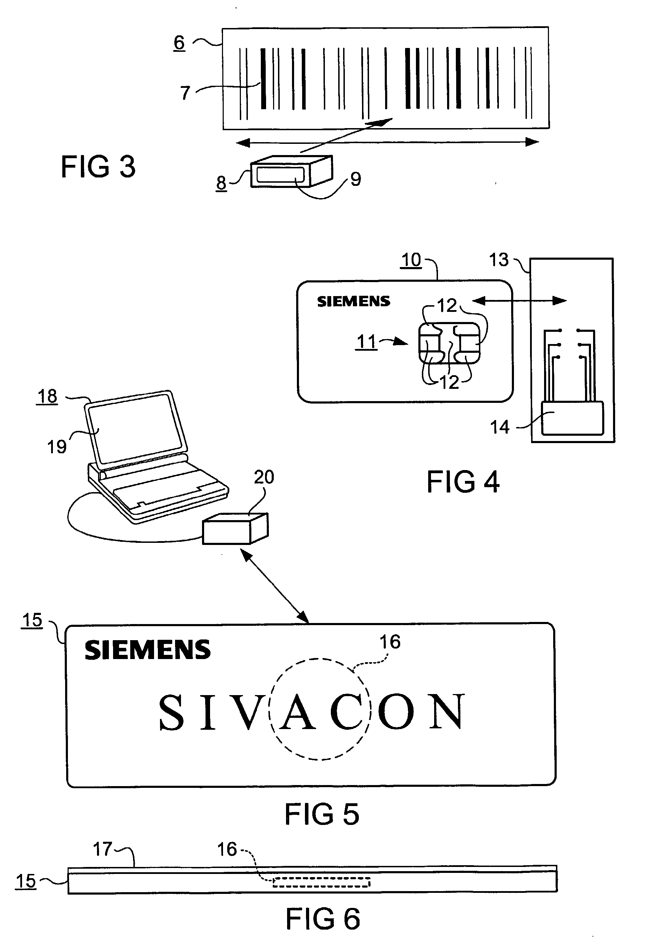

Als erstes einfaches Beispiel für ein solches Kennzeichnungsmittel 6 zeigt die Figur 3 ein selbstklebendes Etikett mit einem Datenträger 7 in der Gestalt eines zur Kennzeichnung von Waren bekannten Strichcodes. Dieser kann beispielsweise so aufgebaut sein, dass wenigstens die Namen des Franchisegebers und des Franchisenehmers sowie eine Bezeichnung des Produktes enthalten sind. Wird das Kenzeichnungsmittel 6 gemäß der Figur 3 an einer geeigneten Stelle des Produktes angebracht, so kann mittels eines gleichfalls in der Figur 3 angedeuteten tragbaren Lesegerätes 8 (Strichcode-Scanner wie an Kassen-Terminals) der Datenträger 7 auf einer Anzeigevorrichtung 9 des Lesegerätes 8 zur Anzeige gebracht werden. Da der Strichcode problemlos zu duplizieren ist, empfiehlt es sich, das mit ihm versehene Kennzeichnungsmittel 6 an einer Stelle des Produktes anzubringen, die nur dem beauftragten Prüfer des Franchisegebers und dem Franchisenehmer bekannt sind. Auch kann das Kennzeichnungsmittel 6 an einer vom Franchisegeber zugelieferten Komponente des Produktes derart angebracht sein, dass nur der beauftragte Prüfer des Franchisegebers das Kennzeichnungsmittel 6 auffinden kann.

Während es sich bei dem Kennzeichnungsmittel 6 gemäß der Figur 3 um ein passives Kennzeichnungsmittel handelt, können auch aktive, d. h. beschreib- und lesbare Kennzeichnungsmittel eingesetzt werden, womit eine Reihe von Vorteilen verbunden ist.

Als Beispiel für ein aktives Kennzeichnungsmittel 10 zeigt die Figur 4 eine Chipkarte- oder Smartcard. Das somit einer Bankkarte oder Versicherungskarte ähnliche Kennzeichnungsmittel 10 trägt dementsprechend als Datenträger 11 einen integrierten Baustein mit Kontaktflächen 12, die mittels eines geeigneten Lesegerätes 13 kontaktierbar sind, um den Dateninhalt einzusehen und mittels einer Anzeigevorrichtung 14 (LCD oder ähnlich) sichtbar zu machen. Der Dateninhalt kann gegenüber einem Strichcode entsprechend der Figur 3 wesentlich umfangreicher sein. Insbesondere ist es daher möglich, in dem Kennzeichnungsmittel 10 nicht nur den allgemeinen Typ des Produktes, sondern das einzelne Produkt betreffende spezifische Angaben wie Auftragsdatum, Schaltbild, Gerätebestückung und ähnliches zu hinterlegen.

Zur Ausschöpfung des durch ein Kennzeichnungsmittel 10 gemäß der Figur 4 ermöglichten Umfanges zu speichernder Daten kann im Rahmen der Franchisevereinbarung vorgesehen sein, dass der Franchise-Nehmer dem Franchise-Geber für einen jeweils vorliegenden Auftrag spezifische Angaben übermittelt und der Franchise-Geber einen mit den entsprechenden Daten versehenes Kennzeichnungsmittel 10 dem Franchise-Nehmer zur Anbringung am fertigen Produkt übergibt. Wie dies bei Bank- und Versicherungskarten bekannt ist, kann auch das Kennzeichnungsmittel 10 die Daten in einer kryptografisch gesicherten Form enthalten. Ein berechtigter Prüfer des Franchisegebers ist daher in der Lage, mit Hilfe seines Lesegerätes 13 die im Datenträger 11 enthaltenen Daten zu lesen. Darüber hinaus können der Zeitpunkt und weitere Merkmale einer Prüfung des Kennzeichnungsmittels 10 in diesem (d.h. in de, Datenträger 11) registriert werden.

Als besonders vielseitiges Kennzeichnungsmittel 15 zeigt die Figur 5 ein Bezeichnungsschild, das als Datenträger 16 eine Transpondereinheit enthält. Das Kennzeichnungsmittel 15 ist mittels einer in der Figur 6 angedeuteten selbstklebenden Haftschicht 17 an dem Produkt sichtbar anzubringen und bietet dem Betrachter z. B. den Namen des Franchisegebers sowie einen Produktnamen dar. In das Material des Bezeichnungsschildes 15 ist der Datenträger 16 derart vollständig eingebettet, dass er für den Betrachter unsichtbar ist. Ähnlich, wie dies bei der Warensicherung in Kaufhäusern und anderen Handelseinrichtungen bekannt ist, kann ein Lesegerät 18 mit dem Kennzeichnungsmittel 15 bzw. dem Datenträger 16 Kontakt aufnehmen. Im Unterschied zur üblichen Warensicherung, bei der es nur darauf ankommt, die Entfernung einer Ware aus einem überwachten Raum festzustellen, ist das Lesegerät 18 als tragbare Einheit ausgebildet, die mittels einer Anzeigevorrichtung 19 den Dateninhalt des Datenträgers 16 darstellen kann. Dieser kann nach Umfang und Inhalt ähnlich wie bei dem Datenträger 11 gemäß der Figur 4 beschaffen sein. Durch die berührungslose Kommunikation zwischen dem Lesegerät 18 und dem Kennzeichnungsmittel 15 ist die Prüfung eines betreffenden Produktes besonders einfach. In der Figur 5 ist das tragbare Lesegerät als Notebook-PC oder Handheld-PC veranschaulicht, das zur Kommunikation mit einem Sende- und Empfangsadapter 20 verbunden ist.

Im Folgenden werden anhand der Figuren 7, 8 und 9 Beispiele für die Ausstattung von Produkten der vorliegend betrachteten Art mit Kennzeichnungsmitteln nach der Erfindung erläutert.

Ein in der Figur 7 gezeigter Schaltschrank 21 ist mit geschlossener Tür 22 dargestellt. Die Tür 22 erstreckt sich in bekannter Weise nicht über die gesamte Höhe des Schaltschrankes 21, sondern lässt eine Sockelblende 23 und eine Kopfblende 24 frei. Sowohl die Tür 22 als auch die Sockelblende 23 und die Kopfblende 24 kommen zur Anbringung eines Kennzeichnungsmittels 6, 10 oder 15 in Betracht.

Die gleichen Kennzeichnungsmittel 6, 10 oder 15 sind im Prinzip auch derart einzusetzen, dass sie bei geöffneten Schaltschrank 21 zugänglich sind. Hierzu zeigt die Figur 8 den Schaltschrank 21 mit geöffneter Tür 21, wobei ein Kennzeichnungsmittel 6, 10, oder 15 an der Innenseite der Tür 22 angebracht ist. Hierfür eignet sich 10 besser als für die äußere Anbringung, weil eine Beeinträchtigung der Kontaktflächen 12 des Datenträgers 11 nicht zu befürchten ist.

Sinngemäße Möglichkeiten zur Anbringung von Kennzeichnungsmitteln 6, 10 oder 15 bieten sich, wenn das Produkt eine Niederspannungs-Schaltanlage 25 ist, wofür in der Figur 9 schematisch ein Beispiel mit drei Feldern dargestellt ist. In dem gezeigten Beispiel weist jedes Feld Geräteabteile 26 mit eigenen Türen 27 sowie einen gemeinsamen Kabelanschlussraum 28 auf, der gleichfalls durch eine Tür 30 verschließbar ist. Ein Kennzeichnungsmittel 6, 10 oder 15 ist im Bereich einer Kopfblende 31 des mittleren Feldes der Schaltanlage 25 angebracht. Das Kennzeichnungsmittel 15 ist hier besonders geeignet. Gleichfalls eignet sich zur Anbringung des Kennzeichnungsmittels die Innenseite der Tür 30 des Kabelanschlussraumes 28 jedes der gezeigten Felder. Ferner bieten sich zur Anbringung der Kennzeichnungsmittel die Außen- oder Innenflächen der Türen 27 der Geräteräume 26 an.

## Patentansprüche

1. Verfahren zur Belieferung eines Abnehmers mit einem Produkt auf dem Gebiet von elektrotechnischen Schaltanlagen (25) und Schranksystemen (21), bei dem ein Technologie-Geber (1) die technische Spezifikation des Produktes erstellt und diese im Rahmen einer vertraglichen Vereinbarung einem Technologie-Empfänger (2) zur wirtschaftlichen Verwertung zwecks Belieferung des Abnehmers überlässt, mit folgenden Merkmalen:
- der Technologie-Geber handelt durch Bereitstellung der Spezifikation und weiterer zur Herstellung des Produktes in einer typgeprüften Ausführung benötigter Hilfsmittel in der Gestalt technischer Anleitungen und Informationen sowie des Benutzungsrechtes an einem Markenzeichen des Technologie-Gebers als Franchise-Geber (4),
- der Technologie-Empfänger handelt durch Auswertung der Spezifikation, der Hilfsmittel und des Benutzungsrechtes als Franchise-Nehmer (5),
- der Franchise-Geber (4) stellt ein Kennzeichnungsmittel (6; 10; 15) bereit, das einen mittels eines elektronischen Lesegerätes (7; 13; 18) lesbaren Datenträger (7; 11; 16) zur Identifizierung des Franchise-Gebers (4) trägt,
- der Franchise-Nehmer (5) bringt das Kennzeichnungsmittel (6; 10; 15) nach der Herstellung des Produktes an diesem an und liefert das Produkt an den Abnehmer.

2. Verfahren nach Anspruch 1,
**dadurch gekennzeichnet,**
**dass** der Datenträger (6) die Gestalt eines Strichcodes aufweist und dass zur Erfassung des Dateninhaltes des Strichcodes ein tragbares und netzunabhängig betreibbares Strichcode-Lesegerät (7) mit einer eigenen Anzeigevorrichtung (8) bereitgehalten wird.

3. Verfahren nach Anspruch 1,
**dadurch gekennzeichnet,**
**dass** das Kennzeichnungsmittel (10; 15) als Datenträger (11; 16) einen elektronisch auswertbaren Informationsspeicher enthält.

4. Verfahren nach Anspruch 3,
**dadurch gekennzeichnet,**
**dass** das Kennzeichnungsmittel (10) eine Karte nach Art einer Bank- oder Versicherungskarte ist, die als Datenträger (11) einen integrierten Halbleiter-Baustein enthält und dass zur Erfassung der Daten des Datenträgers (10) ein tragbares und netzunabhängig betreibbares Lesegerät (13) mit einer Anzeigevorrichtung (14) bereitgehalten wird.

5. Verfahren nach Anspruch 2,
**dadurch gekennzeichnet,**
**dass** der Datenträger (16) eine Transpondereinheit ist und dass zur Erfassung des Dateninhaltes des Datenträgers (16) ein tragbares Lesegerät (18) mit einer netzunabhängigen Energieversorgung und einer Anzeigevorrichtung (19) bereitgehalten wird.

6. Verfahren nach einem der vorangehenden Ansprüche,
**dadurch gekennzeichnet,**
**dass** der Franchise-Nehmer (5) vor der Auslieferung eines Produktes an einen Abnehmer für dessen Auftrag spezifische Daten des Produktes an den Franchise-Geber (4) übermittelt, dieser ein die spezifischen Daten enthaltendes Kennzeichnungsmittel (6; 10; 15) erstellt und dem Franchise-Nehmer (5) übergibt und dieser das Kennzeichnungsmittel (6; 10; 15) vor der Auslieferung des Produktes an diesem anbringt.

7. Verfahren nach einem der vorangehenden Ansprüche,
**dadurch gekennzeichnet,**
**dass** das Kennzeichnungsmittel (6; 10; 15) an der Frontseite eines Schaltschrankes (21) oder einer Schaltanlage (23) angebracht wird.

8. Verfahren nach einem der vorangehenden Ansprüche,
**dadurch gekennzeichnet,**
**dass** das Kennzeichnungsmittel (6; 10; 15) im Inneren eines Schaltschrankes (21) oder einer Schaltanlage (25) an einer hierfür vorgesehenen Stelle befestigt wird.

9. Verfahren nach einem der vorangehenden Ansprüche,
**dadurch gekennzeichnet,**
**dass** das Kennzeichnungsmittel (6; 10; 15) unlösbar bzw. nur unter Beschädigung oder Zerstörung lösbar befestigt wird.

10. Kennzeichnungsmittel für das Verfahren nach einem der vorangehenden Ansprüche,
**dadurch gekennzeichnet,**
**dass** das Kennzeichnungsmittel (15) als ein mit einem den Franchise-Geber (4) bezeichnenden Schriftzug versehenes und den Datenträger (16) aufweisendes Bezeichnungsschild ausgebildet ist.

11. Kennzeichnungsmittel nach Anspruch 10,
**dadurch gekennzeichnet,**
**dass** der Datenträger (16) in das Material des als Bezeichnungsschild ausgebildeten Kennzeichnungsmittels (15) eingebettet ist.

12. Kennzeichnungsmittel nach Anspruch 11,
**dadurch gekennzeichnet,**
**dass** der Datenträger (16) vom Material des Kennzeichnungsmittels (15) umschlossen und unsichtbar ist.
